# EUROPÄISCHE PATENTSCHRIFT

(11) **EP 3 142 843 B1**
(45) Veröffentlichungstag und Bekanntmachung des Hinweises auf die Patenterteilung: **04.04.2018**
(21) Anmeldenummer: 15724525.9
(22) Anmeldetag: 24.04.2015
(51) Int. Cl.: B29C 37/00, B29C 70/32, B29C 70/36, B29C 70/86, B29C 70/08, F16F 9/38, F16F 9/32, B29L 31/06, B29L 31/00, B29K 705/00

(54) **VERFAHREN ZUR HERSTELLUNG EINES DÄMPFERROHRES AUS EINEM FASERVERBUNDWERKSTOFF FÜR EINEN SCHWINGUNGSDÄMPFER**
METHOD FOR PRODUCING A DAMPER TUBE FROM A COMPOSITE FIBER MATERIAL FOR A VIBRATION DAMPER
PROCÉDÉ DE PRODUCTION D'UN TUBE D'AMORTISSEUR À PARTIR D'UN MATÉRIAU COMPOSITE RENFORCÉ PAR DES FIBRES POUR AMORTISSEUR DE VIBRATIONS

(30) Priorität: 15.05.2014 DE 102014106860
(43) Veröffentlichungstag der Anmeldung: 22.03.2017
(73) Patentinhaber: ThyssenKrupp Bilstein GmbH, 58256 Ennepetal (DE); thyssenkrupp AG, 45143 Essen (DE)
(72) Erfinder: KLEINE-BÜNING, Tobias, 40235 Düsseldorf (DE); LUCZAK, Hanno, 45527 Hattingen (DE); MAI, Andreas, 45549 Sprockhövel (DE); KIRCHBERGER, Herwig, A-4470 Enns (AT); STOFF, Jann, A-4645 Grünau im Almtal (AT)
(74) Vertreter: thyssenkrupp Intellectual Property GmbH
(86) Internationale Anmeldenummer: PCT/EP2015/058983
(87) Internationale Veröffentlichungsnummer: WO 2015/172994

(56) Entgegenhaltungen:
- EP-A1- 2 189 274
- DE-A1-102011 109 362
- US-A1- 2010 209 185

## Beschreibung

Die vorliegende Erfindung betrifft ein Verfahren zur Herstellung eines Dämpferrohres für einen Schwingungsdämpfer und einen solchen Schwingungsdämpfer, wobei das Dämpferrohr einen Faserverbundwerkstoff aufweist und an wenigstens einer Endseite des Dämpferrohres wird ein Lasteinleitungselement integriert.

### STAND DER TECHNIK

Die DE 10 2011 109 362 A1 zeigt ein Dämpferrohr für einen Schwingungsdämpfer, wobei das Dämpferrohr aus einem Faserverbundwerkstoff gebildet wird. Endseitig am Dämpferrohr befinden sich in den Faserverbundwerkstoff integrierte Lasteinleitungselemente, die mit dem Dämpferrohr aus dem Faserverbundwerkstoff verklebt sind oder die formschließend mit dem Faserverbundwerkstoff umwickelt sind. Durch die Ausführung der Verbindung zwischen dem Dämpferrohr aus dem Faserverbundwerkstoff und dem Lasteinleitungselement ist der so gebildete Schwingungsdämpfer nur bedingt für höhere Beanspruchungen ausgelegt, da die Verbindung zwischen dem Dämpferrohr und dem wenigstens einen Lasteinleitungselement nicht sehr hoch belastbar ist.

Aus der WO 2009/003 207 A1 sind Lasteinleitungselemente mit einer Außenfläche beschrieben, auf der eine dichte Anordnung von Vorsprüngen aufgebracht ist, und die Lasteinleitungselemente können in einen Aufbau aus Faserverbundwerkstoffen integriert werden, indem die Fasern der Faserverbundwerkstoffe die Vorsprünge formschlüssig ummanteln. Dadurch wird auf vorteilhafte Weise die Übertragung von Lasten wie Zug-/Druck- und/oder Torsionskräfte zwischen dem Faserverbundwerkstoff und dem Lasteinleitungselement ermöglicht. Als Beispiel für vorteilhafte Anwendungsgebiete der Lasteinleitungselemente mit den auf der Außenfläche angeordneten Vorsprüngen wird der Segel- oder Surfsport angegeben, bei welchem einerseits hohe Kräfte auf das Material einwirken, andererseits müssen die verwendeten Materialien jedoch möglichst leicht sein.

### OFFENBARUNG DER ERFINDUNG

Aufgabe der Erfindung ist die Weiterbildung eines Verfahrens zur Herstellung eines Dämpferrohres für einen Schwingungsdämpfer aus einem Faserverbundwerkstoff, bei dem eine mechanisch hoch belastbare Verbindung zwischen dem Faserverbundwerkstoff und einem integrierten Lasteinleitungselement erzeugt wird, wobei das Verfahren zur Herstellung möglichst einfach ausgeführt werden soll.
Diese Aufgabe wird ausgehend von einem Verfahren zur Herstellung eines Dämpferrohres gemäß den bekannten Merkmalen des Anspruchs 1 sowie ausgehend von einem Dämpferrohr gemäß dem Oberbegriff des Anspruchs 8 mit den jeweils kennzeichnenden Merkmalen gelöst. Vorteilhafte Weiterbildungen der Erfindung sind in den abhängigen Ansprüchen angegeben.
Die Aufgabe wird erfindungsgemäß gelöst durch ein Verfahren zur Herstellung eines Dämpferrohres für einen Schwingungsdämpfer, wobei das Dämpferrohr einen Faserverbundwerkstoff aufweist und an wenigstens einer Endseite des Dämpferrohres wird ein Lasteinleitungselement integriert, wobei das Verfahren wenigstens die folgenden Schritte aufweist: Bereitstellen eines Kernkörpers mit einer axialen Erstreckung und Aufbringen einer Beschichtung auf den Kernkörper; Anordnen des Lasteinleitungselementes auf den Kernkörper, wobei das Lasteinleitungselement (11) eine Außenfläche (14) aufweist, auf der Vorsprünge aufgebracht sind; Umwickeln der Beschichtung mit einem Wickelmaterial mittels einem Wickelprozess unter Bildung wenigstens einer Wickellage; Umflechten der Wickellage und wenigstens abschnittsweise der Außenfläche mit einem Flechtmaterial mittels einem Flechtprozess unter Bildung wenigstens einer Flechtlage und Einbringen einer Matrix in die Wickellage und/oder in die Flechtlage durch ein Harzinjektionsverfahren.
Die Flechtlage wird vorzugsweise über der gesamten axialen Länge der Wickellage bzw. der Beschichtung und zusätzlich übergehend in die Außenfläche des oder der Lasteinleitungselemente aufgebracht, also zumindest auch auf den Bereichen des Lasteinleitungselementes mit den Vorsprüngen. Dabei kann die Flechtlage unterbrechungsfrei vom Lasteinleitungselement in den später gebildeten Körper des Dämpferrohres übergehen, sodass insbesondere durch die Flechtlage Axialkräfte, die in Axialrichtung des Dämpferrohres wirken, aufgenommen werden können.

Die Vorsprünge auf der Außenfläche der Lasteinleitungselemente sind vorzugsweise dicht zueinander angeordnet und weisen ein Verhältnis zwischen ihrer Höhe und ihrem Durchmesser von über 1, bevorzugt von über 2 und insbesondere bevorzugt von über 3 auf.

Der Kernkörper kann aus einem verchromten Rundstahl bestehen und wird als Werkzeug mehrfach verwendet. Der Kernkörper ist damit auch als Wickeldorn zu bezeichnen, da dieser zur Ausführung des Wickelprozesses rotierend angetrieben werden kann. Das Aufwickeln kann auch über eine statische Einspannung des Wickeldorns erfolgen und es können Wickelspulen vorgesehen sein, welche um den statischen Kernkörper herum geführt werden.

Nach dem Einbringen der Matrix in die Wickellage und/oder in die Flechtlage durch das Harzinjektionsverfahren und einem anschließenden Aushärten insbesondere unter Wärmezufuhr kann das so gebildete Dämpferrohr mit wenigstens einem integrierten Lasteinleitungselement vom Kernkörper entfernt werden. Der Kernkörper wird dabei innenseitig aus dem gebildeten Dämpferrohr entformt.

Mit besonderem Vorteil werden der Wickelprozess und der Flechtprozess jeweils unter Bildung der Wickellage und der Flechtlage als Trockenprozesse ausgeführt, und erst anschließend wird die Matrix durch das Harzinjektionsverfahren eingebracht. Verwendet werden also bevorzugt trockene, ungetränkte Fasern bzw. Fäden. Das Umwickeln der Beschichtung und das Umflechten der Wickellage und der Außenfläche des Lasteinleitungselementes können jeweils einmalig oder in mehreren Lagen erfolgen, sodass das Dämpferrohr nicht grundsätzlich aus einer einzigen gebildeten Wickellage und Flechtlage hergestellt werden muss. Insbesondere kann das Dämpferrohr einen hybriden Wickel- und Flechtaufbau aufweisen, und es können Kohlenstofffasern und/oder Glasfasern als Wickelmaterial und/oder als Flechtmaterial verwendet werden.

Die Beschichtung kann durch ein Harz, insbesondere durch ein Epoxydharz, bereitgestellt und auf den Kernkörper aufgebracht werden. Die Beschichtung bildet später die innenseitige Gleitoberfläche des Kolbens, der im Dämpferrohr axial beweglich aufgenommen ist. Mit besonderem Vorteil kann die Beschichtung, also insbesondere das Harz, insbesondere das Epoxydharz, einen ähnlichen stofflichen Aufbau aufweisen wie das Harz, das durch das Harzinjektionsverfahren zur Bildung der Matrix in die wenigstens eine Wickellage und/oder die Flechtlage eingebracht wird. Dabei kann das Epoxydharz zur Bildung der Beschichtung beispielsweise zusätzlich Füllstoffe aufweisen.

Das Harzinjektionsverfahren kann bevorzugt nach Art eines Injektionsverfahrens ohne Vakuum ausgeführt werden, was prozessual besonders vorteilhaft ist. Auf gleiche Weise kann das Harzinjektionsverfahren jedoch auch mit Vakuum erfolgen oder das Harzinjektionsverfahren wird ausgeführt mit einem Vakuum und beispielsweise mit einem Fließmedium. Das Harzinjektionsverfahren kann unter Einformung des gebildeten Dämpferrohres in ein Formwerkzeug erfolgen, wobei das Verfahren ohne Vakuum den geringsten Herstellungsaufwand erfordert.

Das Dämpferrohr ist erfindungsgemäß nicht darauf beschränkt, lediglich aus einer einzigen Faserlage, beispielsweise also aus einer Wickellage und aus einer Flechtlage, aufgebaut zu sein. Vielmehr kann vorgesehen sein, dass auf die Flechtlage wenigstens im Bereich des Lasteinleitungselementes und im Übergang wenigstens teilweise auch im Bereich des zu bildenden Dämpferrohres eine Wickellage aufgebracht wird, wodurch eine Stabilisierung des Krafteinleitungsbereichs in der Flechtlage zwischen dem Lasteinleitungselement mit den Vorsprüngen auf der Außenfläche und dem Dämpferrohr aus der Wickellage und der Flechtlage entsteht. Auch kann vorgesehen sein, dass die weitere Wickellage über der gesamten Länge des zu bildenden Dämpferrohres auf die Flechtlage aufgebracht wird.

Mit weiterem Vorteil kann auf die erste Flechtlage, die bereits auf der Wickellage aufgebracht ist, eine weitere Flechtlage aufgebracht werden, und erst dann kann die weitere Wickellage aufgebracht werden.

Insbesondere kann wenigstens auf einer teilweisen axialen Länge eine weitere Wickellage auf die wenigstens eine Flechtlage aufgebracht werden. Folglich kann also das Dämpferrohr aufgebaut sein durch die innenseitige Beschichtung, durch die erste Wickellage, die darauf aufgebrachte Flechtlage und schließlich durch wenigstens eine weitere Wickellage, wobei auch die weitere Wickellage wiederum mit wenigstens einer weiteren Flechtlage überzogen sein kann. Folglich ist der Schichtaufbau des Dämpferrohrs nicht lediglich auf eine Wickellage und eine Flechtlage begrenzt, jedoch sollte die Dicke des Dämpferrohrs einen Wert von 3 mm, bevorzugt einen Wert von 2,5 mm, besonders bevorzugt einen Wert von 2,2 mm und am meisten bevorzugt einen Wert von 2 mm nicht überschreiten.

Die Beschichtung kann vor dem Wickeln der Wickellage angetrocknet werden. Dieses sogenannte Angelieren der Beschichtung bewirkt, dass die Beschichtung eine Vorfestigkeit erfährt, die derart beschaffen ist, dass die Fasern der Flechtlage die Beschichtung nicht mehr nachhaltig verändern. Insbesondere dürfen sich die Fasern der Wickellage nicht in die Beschichtung hineindrücken und auch nicht die Struktur der Beschichtung beeinflussen, um sicherzustellen, dass die Beschichtung nach dem Entformen des Dämpferrohres von dem Kernkörper eine gleichmäßige zylinderförmige Rohrinnenwand bildet. Wird die Beschichtung vor dem Umwickeln mit der Wickellage angeliert, so kann sichergestellt werden, dass die Beschichtung bereits Zähigkeitseigenschaften aufweist, die so beschaffen sind, dass die Wickellage auf der im Wesentlichen unveränderten Außenoberfläche der Beschichtung zur Ruhe kommt. Andererseits soll die Beschichtung jedoch nicht derart gehärtet werden, dass das Harz zur Bildung der Matrix in der Wickellage und in der Flechtlage sich nicht mehr mit dem Harz der Beschichtung verbinden kann.

Im Ergebnis wird ein Verfahren zur Herstellung eines Dämpferrohrs für einen Schwingungsdämpfer bereitgestellt, das einen vorteilhaften Schichtaufbau aufweist, bei dem eine Beschichtung aus einem Harz, insbesondere aus einem Epoxydharz, die Gleitoberfläche des Kolbens bildet, die im Dämpferrohr des Schwingungsdämpfers aufgenommen ist, zugleich wird durch die Anwendung eines kombinierten Wickel- Flechtverfahrens ein Lagenaufbau geschaffen, der sich sowohl über die Beschichtung als auch über das Lasteinleitungselement mit den Vorsprüngen auf der Außenseite erstrecken kann. Dadurch wird das Dämpferrohr des Schwingungsdämpfers im Leichtbau hergestellt, und es können größere Kräfte durch die wenigstens eine Flechtlage zwischen dem Dämpferrohr und den Lasteinleitungselementen des Schwingungsdämpfers übertragen werden, und das Dämpferrohr kann durch die Wickelalge hohen Innendrücken standhalten. Zugleich wird eine vorteilhafte Gleitoberfläche auf der Innenseite des Dämpferrohres bereitgestellt.

Die Aufgabe der vorliegenden Erfindung wird damit auch gelöst durch ein Dämpferrohr für einen Schwingungsdämpfer aufweisend einen Faserverbundwerkstoff, wobei an wenigstens einer Endseite des Dämpferrohres ein Lasteinleitungselement integriert ist, und wobei das Dämpferrohr wenigstens eine Wickellage und wenigstens eine auf der Wickellage aufgebrachte Flechtlage umfasst, wobei das Dämpferrohr auf der Innenseite eine Beschichtung aufweist, wobei das Lasteinleitungselement eine Außenfläche aufweist, auf der Vorsprünge aufgebracht sind, wobei die Außenfläche wenigstens teilweise durch die aufgebrachte Flechtlage umflochten ist und wobei in die Wickellage und/oder in die Flechtlage eine Matrix durch ein Harzinjektionsverfahren eingebracht ist. Der erfindungsgemäße Schwingungsdämpfer weist dabei vorzugsweise eine Beschichtung auf, die durch ein Harz gebildet ist, insbesondere durch ein Epoxydharz. Insbesondere kann vorgesehen sein, dass die Matrix durch ein Harz gebildet ist, das ähnlich zu dem Harz der Beschichtung ausgebildet ist, sodass die Harze eine Verbindung miteinander eingehen können.

Mit weiterem Vorteil kann auf die Wickellage und die Flechtlage wenigstens im Bereich des Lasteinleitungselementes und wenigstens teilweise oder vollständig über der Länge des zu bildenden Dämpferrohrs wenigstens eine weitere Wickellage aufgebracht werden. Diese Wickellage stabilisiert dabei die Flechtlage im Übergangsbereich zwischen dem Lasteinleitungselement und dem gebildeten Dämpferrohr, sodass der Formschluss zwischen der Flechtlage und den Vorsprüngen auf der Außenseite des Lasteinleitungselementes durch die aufgebrachte Wickellage zusätzlich zur Matrix gesichert wird. Mit weiterem Vorteil kann auf die Wickellage wenigstens auf einer teilweisen axialen Länge, vorzugsweise jedoch über der gesamten Länge des Dämpferrohrs und über das Lasteinleitungselement, eine weitere Flechtlage aufgebracht werden.

Die Wickellage bringt neben der Stabilisierung der Flechtlage im Formschluss mit den Vorsprüngen den Vorteil der besseren Aufnahme von hohen Innendrücken im Dämpferrohr. Somit ist eine Funktionstrennung in der Faserverbundstruktur des Dämpferrohres gegeben. Die Wickellagen tragen die Funktion, Innendruckkräfte aufzunehmen und den Bereich der Krafteinleitung zusätzlich zu den Flechtlagen zu sichern, die Flechtlagen tragen die Funktion, die axialen Kräfte in Zug- und Druckrichtung zwischen beispielsweise zwei Lasteinleitungselementen und der Faserverbundstruktur und eventuell auch Torsions- und Biegemomente in der Faserverbundstruktur aufzunehmen.

Gemäß einer noch weiteren vorteilhaften Ausführungsform des Schwingungsdämpfers kann die wenigstens eine Flechtlage triaxial aus einer Glasfaser in Flechtrichtung und einer Kohlefaser in Bauteillängsrichtung ausgebildet sein. Dadurch wird ein vorteilhafter hybrider Geflechtaufbau des Dämpferrohrs gebildet.

Die Flechtlage kann Flechtfäden aufweisen, die wenigstens zwei Schrägfäden und Stehfäden umfasst, sodass die Flechtlage ein triaxiales Geflecht bildet, wobei die Stehfäden in Axialrichtung des Dämpferrohrs verlaufen können. Dadurch werden die Axialkräfte des Dämpferrohrs durch die Flechtlage und insbesondere durch die Stehfäden übertragen, und die Innendruckfestigkeit des Dämpferrohrs wird anteilig durch die Flechtfasern und zusätzlich durch weitere Wickellagen gebildet.

Das Dämpferrohr des Schwingungsdämpfers kann eine Wandstärke von weniger als 3 mm, bevorzugt von weniger als 2, 5 mm, besonders bevorzugt von weniger als 2,2 mm und am meisten bevorzugt von weniger als 2 mm aufweisen.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: ein Ausführungsbeispiel eines Dämpferrohres, hergestellt mit dem erfindungsgemäßen Verfahren, wobei das Dämpferrohr im Wesentlichen aus einer innenseitigen Beschichtung, einer Wickellage und einer Flechtlage mit einem integrierten Lasteinleitungselement ausgebildet ist,
- Figur 2: ein weiteres Ausführungsbeispiel des Dämpferrohres mit einer weiteren Flechtlage, die auf die erste Flechtlage aufgebracht ist,
- Figur 3: ein weiteres Ausführungsbeispiel des Dämpferrohres mit einer weiteren Wickellage im Bereich des Übergangs zwischen einem Lasteinleitungselement und dem Dämpferrohr,
- Figur 4: ein weiteres Ausführungsbeispiel des Dämpferrohres mit einer weiteren Wickellage, die sich über der gesamten Länge des Dämpferrohres erstreckt,
- Figur 5: ein weiteres Ausführungsbeispiel des Dämpferrohres mit einer weiteren Flechtlage, die über der weiteren Wickellage gemäß dem Aufbau aus Figur 4 aufgebracht ist,
- Figur 6: in einer schematischen Ansicht ein Dämpferrohr, das durch das Flechtauge einer Flechtanlage gezogen wird, sodass auf der Außenseite des Dämpferrohrs eine Flechtlage gebildet wird und
- Figur 7: eine Detailansicht einer Flechtlage mit hervorgehobenen Flechtfäden und einer hervorgehobenen Stehfaser.

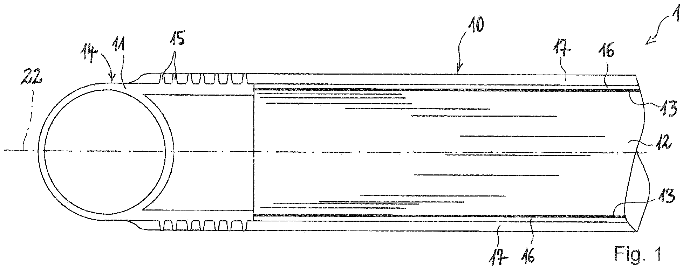

Figur 1 zeigt einen Querschnitt durch Teile eines Schwingungsdämpfers 1 mit einem Dämpferrohr 10 und mit einem Lasteinleitungselement 11, das beispielhaft als Dämpferauge ausgebildet ist und das an eine Achse eines Fahrzeugs angeordnet werden kann. Ein weiteres Lasteinleitungselement 11 kann sich in nicht gezeigter Weise auf der anderen Endseite des Dämpferrohres 10 befinden. Der Schwingungsdämpfer 1 kann beispielsweise Bestandteil des Fahrwerkes eines Fahrzeugs sein. Das Dämpferrohr 10 des Schwingungsdämpfers 1 weist einen Faserverbund auf, und das Ausführungsbeispiel zeigt einen Kernkörper 12, auf den der Faserverbund zur Bildung des Dämpferrohrs 10 aufgebaut wird und der ein wiederverwendbares Werkzeug bildet, wobei an dem Ende des Kernkörpers 12 das Lasteinleitungselement 11 angeordnet ist.

Der Kernkörper 12 weist ein Rundstahlmaterial insbesondere mit einer verchromten Oberfläche auf, und zur Herstellung des Dämpferrohrs 10 auf der Außenoberfläche des Kernkörpers 12 wird auf den Kernkörper 12 zunächst eine Beschichtung 13 aus einem Epoxydharz aufgebracht. Diese Beschichtung 13 wird angeliert, sodass die Beschichtung 13 nicht mehr die gleichen eher fließfähigen Eigenschaften aufweist wie ein Epoxydharz in einem im Wesentlichen flüssigen Zustand. Jedoch ist die Beschichtung 13 nicht voll ausgehärtet, sodass die Beschichtung 13 noch die Fähigkeit besitzt, mit einem weiteren Stoff, also beispielsweise mit einer Matrix, eine Verbindung einzugehen beziehungsweise an diesem anzuhaften. Die Beschichtung 13 weist damit die Eigenschaften einer klebrigen, zähen Masse auf.

Nach Aufbringen der Beschichtung 13 wird das Lasteinleitungselement 11 stirnseitig an den Kernkörper 12 angesetzt und auf nicht näher gezeigte Weise an diesem befestigt oder gehalten. Das Lasteinleitungselement 11 besitzt eine Außenfläche 14, auf der auf dem überwiegenden Teil des Umfangs mehrere eng zueinander angeordnete Vorsprünge 15 aufgebracht sind, die pyramidenstumpfartig, nadelartig oder auf sonstige Weise ausgestaltet und eher schlank sein können.

Befindet sich das Lasteinleitungselement 11 in Anordnung an der Stirnseite des Kernkörpers 12 und ist die Beschichtung 13 aufgebracht, so wird mit einem Flechtprozess zunächst eine Wickellage 16 auf die Außenseite der Beschichtung 13 aufgebracht. Dabei erfolgt die Aufbringung der Wickellage 16 in einem Wickelprozess mit einer Wickelanlage. Die Wickellage 16 kann sich auch teilweise oder vollständig über den Bereich der Vorsprünge 15 der Außenfläche 14 des Lasteinleitungselements 11 erstrecken. Während des Wickelprozesses kann der Kernkörper 12 um seine Längsachse rotieren oder eine oder mehrere Fadenrollen werden unter kontinuierlicher Abwicklung um den ruhenden Kernkörper 12 herumgeführt.

Nach dem Aufbringen der Wickellage 16 wird eine Flechtlage 17 auf die Wickellage 16 durch einen Flechtprozess aufgebracht, wobei die Flechtlage 17 sich entlang der Axialrichtung 22 sowohl über der Länge der Wickellage 16 als auch übergehend in den Längenbereich der Außenfläche 14 des Lasteinleitungselementes 11 erstreckt, wodurch das Lasteinleitungselement 11 in das Dämpferrohr 10 integriert wird. Dabei umschließen bzw. durchdringen die Fäden der Flechtlage 17 die Vorsprünge 15 auf der Außenfläche 14 formschließend, sodass große Kräfte und Momente zwischen dem Lasteinleitungselement 11 und dem freien Körper des Dämpferrohres 10 übertragen werden können.

Die Wickellage 16 bewirkt eine nachgiebigkeitsarme Aufnahme von Innendrücken, die beim Betrieb des Schwingungsdämpfers 1 im Dämpferrohr 10 entstehen können. Insbesondere durch den Verlauf der Wickelfasern der Wickellage 16, der in oder etwa in Umfangsrichtung ausgebildet ist, können große Umfangskräfte aufgenommen werden, wodurch ein Atmungseffekt des Dämpferrohres 10 bei einer Schwankung des Innendruckes minimiert ist.

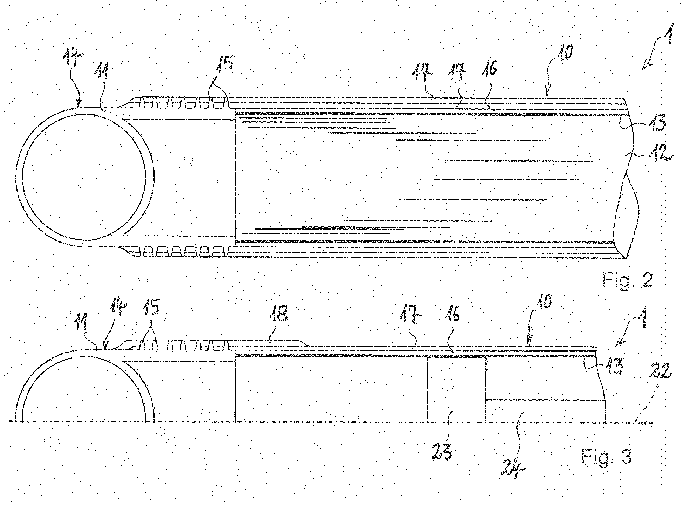

Figur 2 zeigt das Ausführungsbeispiel des Schwingungsdämpfers 1 mit einem Dämpferrohr 10 und mit einem Lasteinleitungselement 11, das auf seiner Außenfläche 14 Vorsprünge 15 aufweist. Wie auch in Figur 1 ist das Dämpferrohr 10 auf einem Kernkörper 12 aufgenommen dargestellt. Der Lagenaufbau des Dämpferrohres 10 mit einer Wickellage 16 und mit einer Flechtlage 17 aufbauend auf der Beschichtung 13 entspricht dabei ebenfalls dem Ausführungsbeispiel aus Figur 1, wobei in Abwandlung des Ausführungsbeispiels in Figur 1 eine weitere Flechtlage 17 auf die erste Flechtlage 17 aufgebracht ist. Dadurch wird die Stabilität des Dämpferrohres 10 zur Aufnahme von Axialkräften verbessert, insbesondere da die Vorsprünge 15 vollständig umflochten werden können, sofern dies nicht mit einer einzigen Flechtlage 17 erfolgen kann.

Figur 3 zeigt ein weiteres Ausführungsbeispiel des Schwingungsdämpfers 1 mit einem Dämpferrohr 10 und mit einem Lasteinleitungselement 11, und im Dämpferrohr 10 ist ein Dämpferkolben 23 gezeigt, der im Dämpferrohr 10 in Axialrichtung 22 geführt ist. An den Dämpferkolben 23 schließt sich eine Kolbenstange 24 an, die beispielsweise direkt oder indirekt mit dem Aufbau eines Fahrzeugs verbunden werden kann.

Das Dämpferrohr 10 weist auf seiner Innenseite eine Beschichtung 13 auf, und der Grundkörper des Dämpferrohrs 10 ist durch die Wickellage 16 und die Flechtlage 17 gebildet, wobei sich letztere über der Erstreckungslänge des Dämpferrohrs 10 sowie über den Bereich der Außenfläche 14 mit den Vorsprüngen 15 des Lasteinleitungselementes 11 hinweg erstreckt. Im Bereich der Außenfläche 14 und über einem angrenzenden Bereich des Dämpferrohrs 10 ist über der Flechtlage 17 eine Wickellage 18 aufgebracht. Diese Wickellage 18 stabilisiert dabei die Flechtlage 17 und unterstützt den Formschluss zwischen den Vorsprüngen 15 und der Flechtlage 17. Die Wickellage 16, insbesondere jedoch die Wickellage 18, kann dabei mit einer Wickelrichtung ausgeführt werden, die etwa der Umfangsrichtung entspricht, wobei mit Vorteil unter einem Winkel beispielsweise zwischen 85° und 90° zur Axialrichtung 22 gewickelt werden kann.

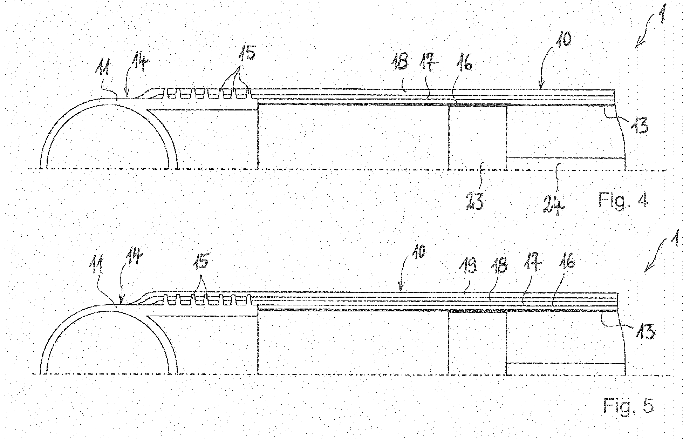

Figur 4 zeigt ein Ausführungsbeispiel des Schwingungsdämpfers 1 mit einem Dämpferrohr 10, einem Lasteinleitungselement 11 und mit dem innenseitig im Dämpferrohr in Kontakt mit der Beschichtung 13 geführten Dämpferkolben 23, an den sich die Kolbenstange 24 anschließt. Das Dämpferrohr 10 weist in seiner freien Länge gemäß diesem Ausführungsbeispiel von innen nach außen die Beschichtung 13 auf der Innenseite auf, auf der zunächst die vorstehend beschriebene Wickellage 16 und die Flechtlage 17 folgen. Die auf die Wickellage 16 aufgebrachte Flechtlage 17 ist dabei derart ausgeführt, dass sich diese über die gesamte Länge der Wickellage 16 und zusätzlich über die Außenfläche 14 des Lasteinleitungselementes 11 mit den Vorsprüngen 15 erstreckt, und auf die Wickellage 17 ist über der gesamten Länge des Dämpferrohrs 10 eine weitere Wickellage 18 aufgebracht. Durch die zweite Wickellage 18 entsteht die besondere Eigenschaft des Dämpferrohres 10, sehr große Innendrücke aufnehmen zu können.

Schließlich zeigt Figur 5 ein Ausführungsbeispiel des Schwingungsdämpfers 1 mit einem Dämpferrohr 10, und beginnend von der Innenseite weist das Dämpferrohr 10 einen mehrfach wechselnden Schichtaufbau aus Wickellagen 16, 18 und Flechtlagen 17, 19 auf. Auf die Beschichtung 13 folgt von innen nach außen zunächst die Wickellage 16, die sich nur über die Beschichtung 13 hinweg erstreckt. Die auf die Wickellage 16 aufgebrachte Flechtlage 17 ist mit einer weiteren Wickellage 18 umwickelt, und über die weitere Wickellage 18 folgt eine abschließende Flechtlage 19. Die Flechtlage 17, die Wickellage 18 und die weitere Flechtlage 19 erstrecken sich zusätzlich über die Außenfläche 14 mit den Vorsprüngen 15 des Lasteinleitungselementes 11 hinweg, und durch den Lagenaufbau wird eine weitere Stabilisierung der Krafteinleitung zwischen dem Lasteinleitungselement 11 und dem Dämpferrohr 10 erreicht wird.

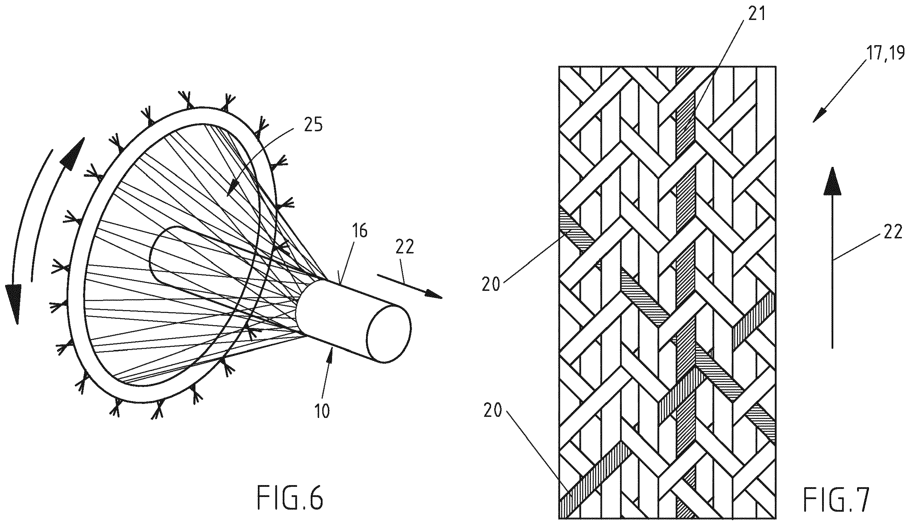

Figur 6 stellt schließlich eine perspektivische, schematische Ansicht eines Flechtprozesses mittels einer Flechtanlage dar, die mit einem Flechtauge gezeigt ist, durch das die Flechtfasern geführt werden und auf der Außenseite des Dämpferrohrs 10 abgelegt werden. Dabei wird das Dämpferrohr 10 in gezeigter Axialrichtung 22 durch das Flechtauge 25 hindurchgeführt. Das Dämpferrohr 10 ist lediglich beispielhaft als Zylinderkörper gezeigt und das Dämpferrohr 10 weist wenigstens die Wickellage 16 auf.

Figur 7 zeigt einen Ausschnitt beispielsweise der Flechtlage 17 oder 19 mit einer Vielzahl von Flechtfäden 20 und 21, und erste Fäden verlaufen schräg und bilden damit Schrägfäden 20, während der gerade Faden als Stehfaden 20 ausgeführt ist und sich in Axialrichtung 22 erstreckt. Damit wird eine Flechtlage 17, 19 geschaffen, die sowohl Flechtfäden 20 zur anteiligen Aufnahme eines Innendrucks bzw. von etwaig auftretenden Torsionskräften aufweist, und weitere Fäden bilden Stehfäden 21, die zur Aufnahme von Axialkräften dienen bzw. Biegekräfte aufnehmen können. Insbesondere dann, wenn eine Flechtlage 17 mit dem gezeigten Aufbau über die Vorsprünge 15 auf der Außenseite 14 des Lasteinleitungselementes 11 gelegt wird, können sich die Vorsprünge 15 einerseits durch die Lücken zwischen den Flechtfäden 20 und den Stehfäden 21 hindurchdrücken, andererseits können sich aber auch die Flechtfäden und Stehfäden über den bevorzugt spitz ausgeführten Vorsprüngen 15 ablegen und ein Fadenroving bestehend aus vielen Einzelfilamenten teilt sich ohne Schädigung auf und umschließt den Vorsprung 15 formschlüssig über die gesamte Höhe, insbesondere aber im Bereich der Wurzel der Vorsprünge 15, sodass auf besonders vorteilhafte Weise eine Formschlussverbindung zwischen der Flechtlage 17 und den Vorsprüngen 15 entsteht. Wird anschließend eine Wickellage 18 über der Flechtlage 17 aufgebracht, so kann die Flechtlage 17 im Formschluss mit den Vorsprüngen 15 stabilisiert werden, insbesondere werden durch die Wickellagen 16, 18 alle darunter liegenden Lagen fest und gleichmäßig an die Außenseite 14 des Lasteinleitungselements 11 herangeführt, wodurch zwischen dem Lasteinleitungselement 11 und dem Dämpferrohr 10 besonders hohe Kräfte übertragen werden können.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste

- 1: Schwingungsdämpfer

- 10: Dämpferrohr
- 11: Lasteinleitungselement
- 12: Kernkörper
- 13: Beschichtung
- 14: Außenfläche
- 15: Vorsprung
- 16: Wickellage
- 17: Flechtlage
- 18: Wickellage
- 19: Flechtlage
- 20: Flechtfaden, Schrägfaden
- 21: Flechtfaden, Stehfaden
- 22: Axialrichtung
- 23: Dämpferkolben
- 24: Kolbenstange
- 25: Flechtauge

## Patentansprüche

1. Verfahren zur Herstellung eines Dämpferrohres (10) für einen Schwingungsdämpfer (1), wobei das Dämpferrohr (10) einen Faserverbundwerkstoff aufweist und an wenigstens einer Endseite des Dämpferrohres (10) wird ein Lasteinleitungselement (11) integriert, wobei das Verfahren wenigstens die folgenden Schritte aufweist:
- Bereitstellen eines Kernkörpers (12) mit einer axialen Erstreckung und Aufbringen einer Beschichtung (13) auf den Kernkörper (12),
- Anordnen des Lasteinleitungselementes (11) auf den Kernkörper (12), wobei das Lasteinleitungselement (11) eine Außenfläche (14) aufweist, auf der Vorsprünge (15) aufgebracht sind,
- Umwickeln der Beschichtung (13) mit einem Wickelmaterial mittels einem Wickelprozess unter Bildung wenigstens einer Wickellage (16),
- Umflechten der Wickellage (16) und wenigstens abschnittsweise der Außenfläche (14) mit einem Flechtmaterial mittels einem Flechtprozess unter Bildung wenigstens einer Flechtlage (17) und
- Einbringen einer Matrix in die Wickellage (16) und/oder in die Flechtlage (17) durch ein Harzinjektionsverfahren.

2. Verfahren nach Anspruch 1, **dadurch gekennzeichnet, dass** die Beschichtung (13) durch ein Harz, insbesondere durch ein Epoxydharz, bereitgestellt und auf den Kernkörper (12) aufgebracht wird.

3. Verfahren nach Anspruch 1 oder 2, **dadurch gekennzeichnet, dass** die Beschichtung (13) vor der Bildung der wenigstens einen Wickellage (16) angetrocknet wird.

4. Verfahren nach einem der Ansprüche 1 bis 3, **dadurch gekennzeichnet, dass** das Harzinjektionsverfahren nach Art eines Injektionsverfahrens ohne Vakuum ausgeführt wird.

5. Verfahren nach einem der vorgenannten Ansprüche, **dadurch gekennzeichnet, dass** auf die Flechtlage (17) im Bereich des Lasteinleitungselementes (11) eine weitere Wickellage (18) aufgebracht wird.

6. Verfahren nach Anspruch 5, **dadurch gekennzeichnet, dass** die weitere Wickellage (18) über dem wenigstens einen Lasteinleitungselement (11) und über der im Wesentlichen gesamten Flechtlage (17) aufgebracht wird.

7. Verfahren nach einem der vorgenannten Ansprüche, **dadurch gekennzeichnet, dass** über der weiteren Wickellage (18) und/oder über der Flechtlage (17) wenigstens eine weitere Flechtlage (19) aufgebracht wird.

8. Dämpferrohr (10) für einen Schwingungsdämpfer (1) aufweisend einen Faserverbundwerkstoff, wobei an wenigstens einer Endseite des Dämpferrohres (10) ein Lasteinleitungselement (11) integriert ist,
wobei
- das Dämpferrohr (10) wenigstens eine Wickellage (16) umfasst,
- das Dämpferrohr (10) auf der Innenseite eine Beschichtung (13) aufweist, **dadurch gekennzeichnet, dass** das Dämpferrohr (10) wenigstens eine auf der Wickellage (16) aufgebrachte Flechtlage (17) umfasst,
- das Lasteinleitungselement (11) eine Außenfläche (14) aufweist, auf der Vorsprünge (15) aufgebracht sind, wobei die Außenfläche (14) wenigstens teilweise durch die aufgebrachte Flechtlage (17) umflochten ist und wobei
- in die Wickellage (16) und/oder in die Flechtlage (17) eine Matrix durch ein Harzinjektionsverfahren eingebracht ist.

9. Schwingungsdämpfer (1) nach Anspruch 8, **dadurch gekennzeichnet, dass** die Beschichtung (13) durch ein Harz, insbesondere durch ein Epoxydharz, gebildet ist und/oder das die Matrix durch ein Harz gebildet ist, das gleich oder ähnlich dem Harz der Beschichtung (13) ausgebildet ist.

10. Schwingungsdämpfer (1) nach einem der Ansprüche 8 oder 9, **dadurch gekennzeichnet, dass** auf die Flechtlage (17) wenigstens im Bereich des Lasteinleitungselementes (11) eine weitere Wickellage (18) aufgebracht ist.

11. Schwingungsdämpfer (1) nach einem der Ansprüche 8 oder 9, **dadurch gekennzeichnet, dass** die weitere Wickellage (18) über dem wenigstens einen Lasteinleitungselement (11) und über der im Wesentlichen gesamten Flechtlage (17) aufgebracht ist.

12. Schwingungsdämpfer (1) nach einem der Ansprüche 8 bis 11, **dadurch gekennzeichnet, dass** über der weiteren Wickellage (18) und/oder über der Flechtlage (17) wenigstens eine weitere Flechtlage (19) aufgebracht ist.

13. Schwingungsdämpfer (1) nach einem der Ansprüche 8 bis 12, **dadurch gekennzeichnet, dass** die wenigstens eine Flechtlage (17, 19) Glasfasern in Flechtrichtung und Kohlenstofffasern und axialer Richtung umfasst und/oder dass die wenigstens eine Wickellage (16, 18) aus einer Kohlenstofffaser ausgebildet ist.

14. Schwingungsdämpfer (1) nach einem der Ansprüche 8 bis 13, **dadurch gekennzeichnet, dass** die Flechtlage (17, 19) Flechtfäden (20, 21) aufweist, die Schrägfäden (20) und Stehfäden (21) umfasst, sodass die Flechtlage (17, 19) ein triaxiales Geflecht bildet, wobei die Stehfäden (21) in Axialrichtung (22) des Dämpferrohres (10) verlaufen.

15. Schwingungsdämpfer (1) nach einem der Ansprüche 8 bis 14, **dadurch gekennzeichnet, dass** das Dämpferrohr (10) eine Wandstärke von weniger als 3 mm, bevorzugt von weniger als 2,5 mm, besonders bevorzugt von weniger als 2,2 mm und am meisten bevorzugt von weniger als 2 mm aufweist.

## Claims

1. Method for producing a damper tube (10) for a vibration damper (1), the damper tube (10) comprising a composite fibre material, and a load introducing element (11) being integrated on at least one end face of the damper tube (10), the method comprising at least the following steps:
- providing a core body (12) having an axial extent and applying a coating (13) to the core body (12) ;
- arranging the load introducing element (11) on the core body (12), the load introducing element (11) having an outer surface (14) on which projections (15) are attached;
- wrapping the coating (13) with a wrapping material by means of a wrapping process, thereby forming at least one wrap layer (16);
- braiding the wrap layer (16) and at least partly the outer surface (14) with a braiding material by means of a braiding process, thereby forming at least one braid layer (17) and
- introducing a matrix into the wrap layer (16) and/or into the braid layer (17) by means of a resin injection process.

2. Method according to Claim 1, **characterized in that** the coating (13) is provided by a resin, in particular by an epoxy resin, and is applied to the core body (12).

3. Method according to Claim 1 or 2, **characterized in that** the coating (13) is initially dried before the forming of the at least one wrap layer (16).

4. Method according to one of Claims 1 to 3, **characterized in that** the resin injection process is performed in the manner of an injection process without a vacuum.

5. Method according to one of the preceding claims, **characterized in that** a further wrap layer (18) is applied to the braid layer (17) in the region of the load introducing element (11).

6. Method according to Claim 5, **characterized in that** the further wrap layer (18) is applied over the at least one load introducing element (11) and over the substantially entire braid layer (17).

7. Method according to one of the preceding claims, **characterized in that** at least one further braid layer (19) is applied over the further wrap layer (18) and/or over the braid layer (17).

8. Damper tube (10) for a vibration damper (1) comprising a composite fibre material, a load introducing element (11) having been integrated on at least one end face of the damper tube (10), wherein
- the damper tube (10) comprises at least one wrap layer (16),
- the damper tube (10) has a coating (13) on the inner side,
**characterized in that** the damper tube (10) comprises at least one braid layer (17) applied on the wrap layer (16),
- the load introducing element (11) has an outer surface (14), on which projections (15) are attached, wherein the outer surface (14) has been at least partially braided by the applied braid layer (17) and wherein
- a matrix has been introduced into the wrap layer (16) and/or into the braid layer (17) by a resin injection process.

9. Vibration damper (1) according to Claim 8, **characterized in that** the coating (13) is formed by a resin, in particular by an epoxy resin, and/or **in that** the matrix is formed by a resin that is formed identically or similarly to the resin of the coating (13).

10. Vibration damper (1) according to either of Claims 8 and 9, **characterized in that** a further wrap layer (18) has been applied to the braid layer (17) at least in the region of the load introducing element (11) .

11. Vibration damper (1) according to either of Claims 8 and 9, **characterized in that** the further wrap layer (18) has been applied over the at least one load introducing element (11) and over the substantially entire braid layer (17).

12. Vibration damper (1), according to one of Claims 8 to 11, **characterized in that** at least one further braid layer (19) has been applied over the further wrap layer (18) and/or over the braid layer (17).

13. Vibration damper (1) according to one of Claims 8 to 12, **characterized in that** the at least one braid layer (17, 19) comprises glass fibres in the braiding direction and carbon fibres and the axial direction and/or **in that** the at least one wrap layer (16, 18) is formed from a carbon fibre.

14. Vibration damper (1) according to one of Claims 8 to 13, **characterized in that** the braid layer (17, 19) has braiding threads (20, 21), which comprises crossing threads (20) and stationary threads (21), so that the braid layer (17, 19) forms a triaxial braiding, wherein the stationary threads (21) run in the axial direction (22) of the damper tube (10) .

15. Vibration damper (1) according to one of Claims 8 to 14, **characterized in that** the damper tube (10) has a wall thickness of less than 3 mm, preferably of less than 2.5 mm, particularly preferably of less than 2.2 mm and most preferably of less than 2 mm.

## Revendications

1. Procédé de fabrication d'un tube (10) pour un amortisseur de vibrations (1), le tube d'amortisseur (10) présentant un matériau composite de fibres et un élément (11) d'introduction de charge étant intégré à au moins un côté d'extrémité du tube d'amortisseur (10), le procédé présentant au moins les étapes suivantes :
préparer un corps d'âme (12) présentant une extension axiale et application d'un revêtement (13) sur le corps d'âme (12),
placer l'élément (11) d'introduction de charge sur le corps d'âme (12), l'élément (11) d'introduction de charge présentant une surface extérieure (14) sur laquelle des saillies (15) sont appliquées,
entourer le revêtement (13) par un matériau de bobinage au moyen d'une opération de bobinage qui forme au moins une couche de bobinage (16),
recouvrement par une tresse de la couche de bobinage (16) et d'au moins certaines parties de la surface d'extérieure (14) par un matériau de tressage, au moyen d'une opération de tressage qui forme au moins une couche tressée (17) et
placement d'une matrice dans la couche de bobinage (16) et/ou dans la couche tressée (17), par une opération d'injection de résine.

2. Procédé selon la revendication 1, **caractérisé en ce que** le revêtement (13) par une résine et en particulier par une résine époxy est préparé avant d'être appliqué sur le corps d'âme (12).

3. Procédé selon les revendications 1 ou 2,
**caractérisé en ce que** le revêtement (13) est séché avant la formation de la ou des couches de bobinage (16) .

4. Procédé selon l'une des revendications 1 à 3,
**caractérisé en ce que** l'opération d'injection de résine est réalisée sous la forme d'une opération d'injection sans application d'un vide.

5. Procédé selon l'une des revendications précédentes, **caractérisé en ce qu'**une autre couche de bobinage (18) est appliquée sur la couche tressée (17) au niveau de l'élément (11) d'introduction de charge.

6. Procédé selon la revendication 5, **caractérisé en ce que** l'autre couche de bobinage (18) est appliquée au-dessus du ou des éléments (11) d'introduction de charge et au-dessus essentiellement de la totalité de la couche tressée (17).

7. Procédé selon l'une des revendications précédentes, **caractérisé en ce qu'**au moins une autre couche tressée (19) est appliquée sur l'autre couche de bobinage (18) et/ou sur la couche tressée (17).

8. Tube (10) pour un amortisseur de vibrations (1), présentant un matériau composite de fibres et un élément (11) d'introduction de charge étant intégré à au moins un côté d'extrémité du tube d'amortisseur (10),
le tube d'amortisseur (10) comportant au moins une couche de bobinage (16),
le tube d'amortisseur (10) présentant sur son côté intérieur un revêtement (13),
**caractérisé en ce que**
le tube d'amortisseur (10) comporte une couche tressée (17) appliquée au moins sur la couche de bobinage (16),
**en ce que** l'élément (11) d'introduction de charge présente une surface extérieure (14) sur laquelle des saillies (15) sont appliquées, la surface extérieure (14) étant entourée au moins en partie par une couche tressée (17) qui y est appliquée et
**en ce qu'**une matrice est apportée dans la couche de bobinage (16) et/ou la couche tressée (17) par une opération d'injection de résine.

9. Amortisseur de vibrations (1) selon la revendication 8, **caractérisé en ce que** le revêtement (13) est formé par une résine et en particulier par une résine époxy et/ou **en ce que** la matrice est formée d'une résine similaire ou identique à la résine du revêtement (13).

10. Amortisseur de vibrations (1) selon l'une des revendications 8 ou 9, **caractérisé en ce qu'**une autre couche de bobinage (18) est appliquée sur la couche tressée (17) au niveau de l'élément (11) d'introduction de charge.

11. Amortisseur de vibrations (1) selon l'une des revendications 8 ou 9, **caractérisé en ce que** l'autre couche de bobinage (18) est appliquée au-dessus du ou des éléments (11) d'introduction de charge et au-dessus essentiellement de la totalité de la couche tressée (17) .

12. Amortisseur de vibrations (1) selon l'une des revendications 8 à 11, **caractérisé en ce qu'**au moins une autre couche tressée (19) est appliquée sur l'autre couche de bobinage (18) et/ou sur la couche tressée (17) .

13. Amortisseur de vibrations (1) selon l'une des revendications 8 à 12, en ce que la ou les couches tressées (17, 19) contiennent des fibres de verre dans la direction du tressage et des fibres de carbone et la direction axiale et/ou en ce que la ou les couches de bobinage (16, 18) sont formées de fibres de carbone.

14. Amortisseur de vibrations (1) selon l'une des revendications 8 à 13, **caractérisé en ce que** la couche tressée (17, 19) présente des fils de tressage (20, 21) qui comporte des fils obliques (20) et des fils debout (21) de telle sorte que la couche tressée (17, 19) forme un treillis triaxial, les fils de debout (21) s'étendant dans la direction axiale (22) du tube d'amortisseur (10).

15. Amortisseur de vibrations (1) selon l'une des revendications 8 à 14, **caractérisé en ce que** le tube d'amortisseur (10) présente une paroi d'une épaisseur inférieure à 3 mm, de préférence inférieure à 2,5 mm, de façon particulièrement préférable inférieure à 2,2 mm et de la façon la plus préférable inférieure à 2 mm.
